# EUROPÄISCHE PATENTSCHRIFT

(11) **EP 0 655 870 B1**
(45) Veröffentlichungstag und Bekanntmachung des Hinweises auf die Patenterteilung: **03.03.2004**
(21) Anmeldenummer: 94203392.9
(22) Anmeldetag: 22.11.1994
(51) Int. Cl.: H04Q 3/00, H04M 3/42

(54) **Ausführung von Diensten in einem Kommunikationssystem**
Service execution in a communications system
Exécution de services dans un système de communications

(30) Priorität: 26.11.1993 DE 4340326
(43) Veröffentlichungstag der Anmeldung: 31.05.1995
(73) Patentinhaber: Philips Intellectual Property & Standards GmbH, 20099 Hamburg (DE); Koninklijke Philips Electronics N.V., 5621 BA Eindhoven (NL)
(72) Erfinder: Abramowski, Stephan, Dr., c/o Philips, D-20097 Hamburg (DE); Kehne, Axel, Dipl.-Inform, c/o Philips, D-20097 Hamburg (DE); Klabunde, Karin, Dipl.-Inform., c/o Philips, D-20097 Hamburg (DE); Konrads, Ursula, Dr., c/o Philips, D-20097 Hamburg (DE)
(74) Vertreter: Volmer, Georg, Dipl.-Ing.

(56) Entgegenhaltungen:
- EP-A- 0 228 048
- US-A- 4 782 517
- IEEE GLOBAL TELECOMMUNICATIONS CONFERENCE & EXHIBITION, Bd. 2, 28.November 1988 HOLLYWOOD, FLA, US, Seiten 1039-1043, XP 000013921 GOLDAPER 'Operations technology impacts of potential new network capabilities'
- INTERNATIONAL CONFERENCE ON COMMUNICATIONS, Bd. 2, 23.Juni 1991 DENVER US, Seiten 936-940, XP 000269623 FIGURSKI ET AL. 'User-centered programmability of Intelligent Network features'
- IEEE TRANSACTIONS ON COMMUNICATIONS, Bd. 36, Nr. 12, Dezember 1988 NEW YORK US, Seiten 1296-1301, XP 000029218 DOYLE ET AL. 'The Intelligent Network concept'

## Beschreibung

Die Erfindung bezieht sich auf ein Kommunikationssystem mit einer zur Ausführung von Diensten vorgesehenen Steuervorrichtung, die mit einer Datenbank und über wenigstens eine Vermittlungsvorrichtung mit wenigstens einem Endgerät gekoppelt ist.

Aus der Patentanmeldung WO 92/11724 ist ein Kommunikationssystem bekannt, das ein Nachrichtennetz (switched telephone network, service control point) mit mehreren Vermittlungsvorrichtungen und damit gekoppelte Endgeräte enthält. Bestimmte im Nachrichtennetz enthaltene Vermittlungsvorrichtungen dienen einerseits dazu Vermittlungsfunktionen mit verschiedenen Endgeräten (z.B. Fernsprechverkehr) oder weiteren Vermittlungsstellen und andererseits eine Vermittlung mit einem zur Bearbeitung von Diensten vorgesehenem Netz (Overlay-Netz) durchzuführen. Ein Dienst der Deutschen Bundespost Telekom ist beispielsweise der private Informationsdienst Tele-Info-Service.

Wird von einem Teilnehmer eine spezielle Dienstnummer (z.B. 0190...) gewählt, so erkennt dies eine Vermittlungsvorrichtung (service switching point) und stellt eine entsprechende Verbindung mit diesem zur Bearbeitung von Diensten vorgesehenem Netz her. Wenigstens bestimmte Vermittlungsvorrichtungen führen also außer ihrer normalen Vermittlung von Fernsprechverbindungen auch eine Anrufbearbeitung und Durchschaltung zum Dienste bearbeitendem Netz durch.

Wenn ein Teilnehmer einen Dienst nutzen möchte (Dienstabonnierung, Dienstbereitstellung), kontaktiert der Teilnehmer den Dienstbetreiber und erhält z.B. über ein Schreiben die für die Dienstnutzung notwendigen Daten (z.B. Identifikationsnummer, Registrierungsnummer). Eine Kündigung der Dienstnutzung ist ebenfalls nur durch ein Schreiben möglich. Ein Teilnehmer kann jedoch eine Änderung von Dienstparametern von seinem Endgerät aus durchführen. Beispielsweise kann eine Anrufumlenkung verändert werden (vgl. "Neue Dienste im intelligenten Telefonnetz" von Wilhelm Krusch, R. v. Decker's Verlag, G. Schenk, Heidelberg, 1993, Seite 156).

Die Patentschrift US-A-4 782 517 beschreibt ein Kommunikationssystem, welches für verschiedene Endgeräte (Telefon, etc.) eines Telekommunikationsnetzes durch einen Server ansprechbar ist. Innerhalb des Kommunikationssystems ist ein Prozessor notwendig, der zur Steuerung eines Servers und zum Zugriff auf eine Datenbank dient, um einen gewünschten Dienst des Benutzers eines Endgerätes zu erfüllen. Der Benutzer des Endgerätes sendet durch den Tastendruck auf seinem Endgerät einen Parameter an den Prozessor, dabei ist die Anzahl der zu wählenden Parameter auf zwölf Möglichkeiten beschränkt, da Endgeräten jeweils eine Tastatur bestehend aus zwölf Tasten besitzen und jeweils eine Taste (bzw. das durch die Taste ausgelöste Signal) einem Befehl entspricht. Die zu wählenden Befehle bestehen dazu aus jeweils einer kleinsten Befehlseinheit auf tiefstem Sprachenniveau. Der Benutzer des Endgeräts kann nicht am Endgerät durch die Wahl bestimmter Tasten gewünschte Dienste einfügen, löschen oder ändern. Das Einfügen, Löschen und Ändern der Dienste ist nur dem Anbieter des Telekommunikationssystem unter zu Hilfenahme von gängigen Datenbankmanagementtechniken erlaubt.

Die Veröffentlichung mit dem Titel "User-centered programmability of Intelligent Network features" von Figurski et al.; International Conference on Communications, Bd. 2, 23.Juni 1991 Denver US, Seite 936-940 befasst sich mit durch den Benutzer veränderlichen Diensten eines Telekommunikationsnetzes, jedoch muss der Zugriff des Benutzers auf die Datenbank (Service Management System) über VT100 Computer Terminals geschehen. Der Benutzer hat somit auch einen direkten Zugriff auf die Datenbank des dienstanbietenden Netzes. Ein indirekter Zugriff des Benutzers, wie z.B. durch das Aufrufen von Dienstlogikprogrammen des Benutzers zur Änderung, Abonnieren und Löschen eines Dienstes, die für die Übertragung der neuen Daten und eine Aktualisierung der Datenbank sorgen, wird in diesem Dokument nicht erwähnt. In dem Dokument werden einzelne Aspekte (Features) eines Dienstes als durch den Benutzer veränderlich bzw. de / aktiviert beschrieben. Die Änderungsfunktion von Dienstparameter ist ausführlich dargestellt, über das Abonnieren bzw. Löschen eines neuen Dienstes am Telefon durch den Benutzer oder über eine Registrierung des Benutzers als Teilnehmer eines Dienstes wird dagegen nicht berichtet.

In der Veröffentlichung "Operation technology impacts of potential new network capabilities", IEEE Global Telecommunications Conference & Exhibition, Bd. 2, 28. November 1988 Hollywood, FLA, US, Seite 1039-1043, XP 000013921 Goldaper wird ein Kommunikationssystem beschreiben, bei dem einem Kunden eines Dienstanbieters für Sprachansagen/Mitteilung ein fester Dienst angeboten wird. Der Kunde des Dienstanbieters ist in der Lage eine Änderung, Aktivierung und Deaktivierung eines Dienstparameters von seinem Endgerät aus vorzunehmen. Die Möglichkeit einen Dienstparameter zu ändern, wird lediglich dem Kunden gegeben, so dass zeitintensive Abonnierungs- und Kündigungsvorgänge bei dem Dienstanbieter nicht entfallen können.

Der Erfindung liegt die Aufgabe zugrunde, ein Kommunikationssystem zu schaffen, das den Zugang zu einem Dienst erleichtert.

Die Aufgabe wird durch ein Kommunikationssystem mit einer zur Ausführung von Diensten vorgesehenen Steuervorrichtung gelöst, die
- nach Empfang von einem Endgerät gesendeten, aus mehreren Ziffern bestehenden Parametern zur Entnahme eines Dienstlogikprogramms aus einer Datenbank und
- in Abhängigkeit von einem Dienstlogikprogramm und zweiten Parametern zur Aktivierung eines Dienstes und
- in Abhängigkeit von einem Dienstlogikprogramm und dritten, aus mehreren Ziffern bestehenden Parametern zur Änderung von Dienstparametern
- in Abhängigkeit von einem Dienstlogikprogramm und ersten Parametern zur Bereitstellung eines Dienstes für einen Teilnehmer und zur Übermittlung wenigstens eines Dienstparameters an das Endgerät und/ oder in Abhängigkeit von einem Dienstlogikprogramm und vierten Parametern zur Löschung der Teilnahmeberechtigung an einem Dienst für einen Teilnehmer vorgesehen ist.

Bei dem erfindungsgemäßen Kommunikationssystem kann die Steuervorrichtung entweder ein einziges Dienstlogikprogramm für die Nutzung des abonnierten Dienstes und für die Abonnierung des Dienstes und/oder für die Kündigung des abonnierten Dienstes aus einer Datenbank entnehmen, wenn die Steuervorrichtung bestimmte Parameter empfangen hat. Die Parameter können beispielsweise Ziffern einer Rufnummer sein, die ein Teilnehmer an einem Endgerät eingegeben hat (Dienstaufruf). Es können auch drei einzelne Dienstlogikprogramme für die Abonnierung des Dienstes, die Nutzung des abonnierten Dienstes und für die Kündigung des abonnierten Dienstes vorhanden sein, die aus der Datenbank zu entnehmen sind.

Empfängt die Steuervorrichtung erste Parameter, wird aus der Datenbank ein (erstes) Dienstlogikprogramm geholt, mit dem die Abonnierung oder Bereitstellung eines Dienstes durchgeführt wird. Dem Endgerät wird anschließend noch wenigstens ein Dienstparameter zugeführt. Unter einem Dienstparameter ist z.B. eine Teilnehmernummer zu verstehen, die Bestandteil der Dienst-Rufnummer sein kann. Mit der Dienst-Rufnummer wird ein abonnierter Dienst aktiviert, den ein Teilnehmer nutzen möchte.

Nach Empfang eines zweiten Parameters (z.B. Ziffern der Dienst-Rufnummer) wird ein (zweites) Dienstlogikprogramm von der Steuervorrichtung aus der Datenbank entnommen, mit welchem der abonnierte Dienst aktiviert wird. Ein solcher Dienst kann beispielsweise eine Verbindung mit einer gespeicherten Rufnummer (persönliche Rufnummer) durchführen.

Eine Kündigung eines Dienstes wird mit einem (vierten) Dienstlogikprogramm durchgeführt, daß von der Steuervorrichtung aus der Datenbank nach Empfang von vierten Parametern entnommen wird. Es wird anschließend die Teilnahmeberechtigung an einem Dienst und damit die Teilnehmernummer gelöscht. Eine Steuervorrichtung kann die Abonnierung und Kündigung von Diensten oder die Abonnierung oder die Kündigung zur Verfügung stellen.

Durch die erfindungsgemäßen Maßnahmen wird der Zugang zu neuen Diensten in Kommunikationssystemen erleichtert. Es fallen zeitintensive Abonnierungs- und Kündigungsvorgänge bei dem Dienstanbieter weg.

Weiter kann die Steuervorrichtung auch eine Änderung von Dienstparametern durchführen. Hierbei ist die Steuerschaltung in Abhängigkeit von einem Dienstlogikprogramm und dritten Parametern zur Änderung von Dienstparametern vorgesehen. Ein (drittes) Dienstlogikprogramm wird von der Steuervorrichtung aus der Datenbank geholt, wenn ein dritter Parameter von einem Endgerät empfangen worden ist. Hiermit kann eine Änderung von Dienstparametern (z.B. persönliche Rufnummer) durchgeführt werden.

Soll eine Abonnierung eines Dienstes ausgeführt werden, ist die Steuervorrichtung nach Wahl einer Dienstzugangs-Rufnummer von einem Endgerät zur Entnahme des ersten Dienstlogikprogramms, nach Empfang einer teilnehmerspezifischen Registrierungsnummer zur Aufforderung einer Identifizierung und nach einer positiven Überprüfung der Identifizierung zur Ausgabe der Dienst-Rufnummer, der Dienständerungs-Rufnummer und der Dienstlöschungs-Rufnummer an das Endgerät vorgesehen. Die Ziffern der Dienstzugangs-Rufnummer stellen zumindest teilweise erste Parameter dar. Die Registrierungsnummer gibt an, daß ein Teilnehmer einen Dienst von bestimmten Dienstanbietern abonnieren kann. Durch die Identifizierung, die beispielsweise über eine Identifikationsnummer (PIN) oder eine Sprachmustererkennung erfolgt, wird angezeigt, daß der Teilnehmer die Berechtigung hat, Dienste zu abonnieren. Wenn die Steuervorrichtung feststellt, daß die Identifizierung nicht korrekt erfolgt ist, ist eine Abonnierung nicht möglich. Nach der Identifizierung könnte auch eine Auswahl zwischen verschiedenen Diensten des Diensteanbieters erfolgen.

Zur Aktivierung eines Dienstes wird von einem Teilnehmer eine Dienst-Rufnummer gewählt, deren Ziffern zumindest teilweise zweite Parameter darstellen. Die Steuervorrichtung ist nach Wahl einer Dienst-Rufnummer zur Entnahme des zweiten, zur Aktivierung oder Nutzung eines abonnierten Dienstes dienenden Dienstlogikprogramms und zur Ausführung des Dienstes vorgesehen.

Die Änderung von Dienstparametern wird von der Steuervorrichtung auf folgende Weise durchgeführt:
Die Steuervorrichtung ist nach Wahl einer Dienständerungs-Rufnummer von einem Endgerät zur Entnahme des dritten Dienstlogikprogramms und zur Aufforderung der Eingabe einer Identifikationsnummer an das Endgerät, nach einer positiven Überprüfung der Identifizierung zur Aufforderung der Angabe über die vorzunehmende Änderung wenigstens eines Dienstparameters an das Endgerät und zur Speicherung der geänderten, empfangenen Dienstparameter vorgesehen. Die Ziffern der Dienständerungs-Rufnummer stellen zumindest teilweise dritte Parameter dar. Ein Teilnehmer teilt der Steuervorrichtung beispielsweise über die Tastatur des Endgerätes der Steuervorrichtung einen neuen Dienstparameter (z.B. neue persönliche Rufnummer) mit.

Die Kündigung eines Dienstes wird folgendermaßen bewerkstelligt: Die Steuervorrichtung ist nach Wahl einer Dienstlöschungs-Rufnummer von einem Endgerät zur Entnahme des vierten Dienstlogikprogramms und zur Aufforderung der Identifizierung an das Endgerät und nach einer positiven Überprüfung der empfangenen Identifizierung zur Löschung der für die Bereitstellung des Dienstes erforderlichen teilnehmerspezifischen Rufnummern und Dienstparameter vorgesehen.

Die Steuervorrichtung ist mit einer Datenbank und wenigstens einer Vermittlungsvorrichtung gekoppelt. Eine Vermittlungsvorrichtung dient zur Weiterleitung von empfangenen Rufnummern und/oder Dienstparametern an die Steuervorrichtung und zum Empfang von Steuerbefehlen von der Steuervorrichtung. Beispielsweise kann eine Vermittlungsvorrichtung eine Verbindung nach einem entsprechenden Steuerbefehl von der Steuervorrichtung mit einem Endgerät aufbauen.

Eine oder mehrere Vermittlungsvorrichtungen können Bestandteil eines Nachrichtennetzes sein, das außer den Verbindungen zwischen Steuervorrichtung und Endgerät auch noch Verbindungen zwischen verschiedenen Endgeräten und/oder anderen Vermittlungsvorrichtungen herstellt. Die Steuervorrichtung, die Vermittlungsvorrichtung und die Datenbank können auch Bestandteil einer Dienstvorrichtung sein, die über ein Nachrichtennetz mit wenigstens einem Endgerät gekoppelt ist. Hierbei ist die Dienstvorrichtung ähnlich wie ein Endgerät mit einer Vermittlungsvorrichtung eines Nachrichtennetzes gekoppelt.

In einer Weiterbildung der Erfindung ist mit einer Vermittlungsvorrichtung und einer Steuervorrichtung eine Sprachverarbeitungsvorrichtung gekoppelt, die zur Spracherkennung einer über eine Vermittlungsvorrichtung zugeführten Nachricht, zur Weiterleitung der Nachricht an die Steuervorrichtung, zur Bildung einer Sprachansage aus einer von der Steuervorrichtung übermittelten Nachricht und zur Zuführung der gebildeten Sprachansage an die Vermittlungsvorrichtung vorgesehen ist. Durch die Sprachverarbeitungsvorrichtung wird also eine Spracherkennung von Ansagen eines Teilnehmers und die Umsetzung von Nachrichten der Steuervorrichtung in eine Sprachansage durchgeführt.

Die Erfindung bezieht sich auch auf eine Steuervorrichtung zur Ausführung von Diensten und auf eine Dienstvorrichtung mit einer Steuervorrichtung zur Ausführung von Diensten und einer Vermittlungsstelle.

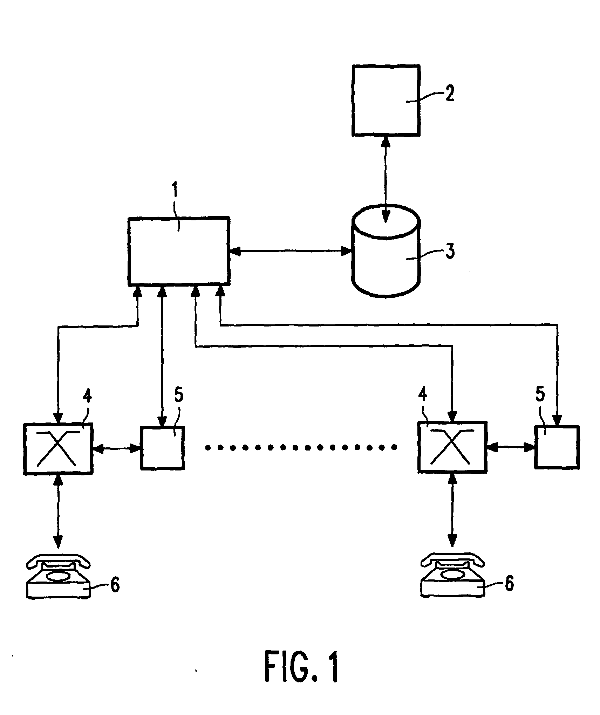

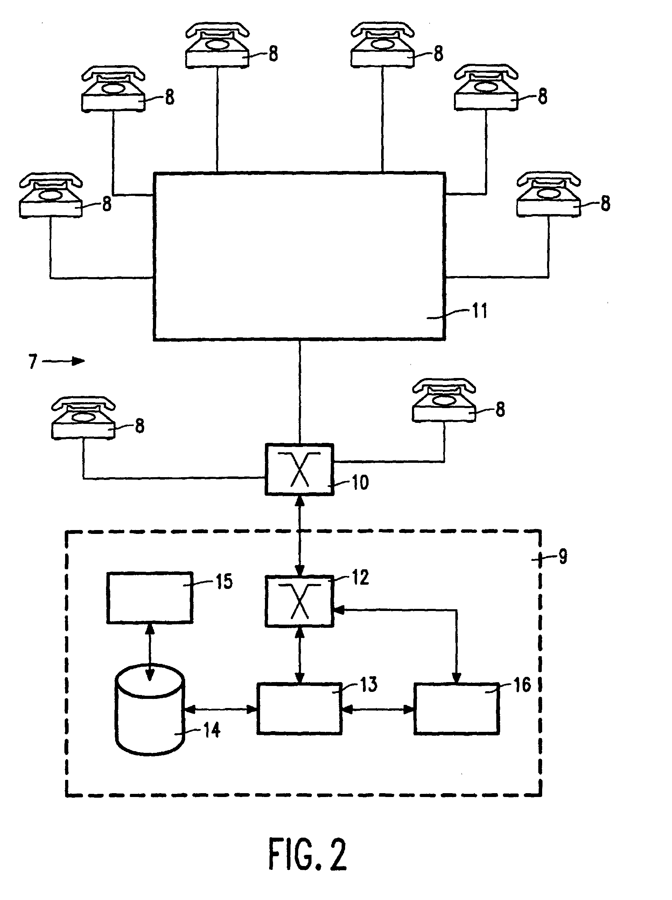

Ausführungsbeispiele der Erfindung werden nachstehend anhand der Figuren erläutert. Die Fig. 1 und 2 zeigen jeweils Kommunikationssysteme zur Ausführung von Diensten.

Das in der Fig. 1 dargestellte Kommunikationssystem enthält eine Steuerungsvorrichtung 1, die mit einer Dienstentwicklungsvorrichtung 2 einer Datenbank 3 mehreren Vermittlungsvorrichtungen 4 und mehreren Sprachverarbeitungsvorrichtungen 5 gekoppelt ist. Die jeweiligen Sprachverarbeitungsvorrichtungen 5 sind noch mit jeweils einer zugeordneten Vermittlungsvorrichtung 4 verbunden. Die Vermittlungsvorrichtungen 4 sind Teil eines Nachrichtennetzes und sind entweder direkt oder über weitere Vermittlungsvorrichtungen mit Endgeräten 6 gekoppelt. Von einem Endgerät 6 aus wird durch Wahl von bestimmten Ziffern einer Rufnummer eine Verbindung von einer Vermittlungsvorrichtung 4 zur Steuervorrichtung 1 geschaltet. Nach Empfang von bestimmten Zeichen (z.B. Ziffern einer Rufnummer) entnimmt die Steuervorrichtung 1 aus der Datenbank 3 ein bestimmtes Dienstlogikprogramm, das anschließend abgearbeitet wird. Beispielsweise kann von einem Endgerät 6 ein Gespräch mit einem bestimmten Teilnehmer gewünscht werden, dessen Standort und damit dessen Rufnummer sich ändert (Persönlicher-Rufnummern-Dienst = PN-Dienst). Dieser Teilnehmer hat der Steuerungsvorrichtung 1 bekanntgegeben, unter welcher Rufnummer er zu erreichen ist. Diese Rufnummer ist beispielsweise in der Datenbank 3 gespeichert und wird aus dieser entnommen, wenn eine bestimmte Dienst-Rufnummer von einem anderen Teilnehmer über ein Endgerät 6 gewählt wird. Die Steuervorrichtung 1 gibt daraufhin einen Steuerbefehl an eine Vermittlungsvorrichtung 4, die die Verbindung mit dem Teilnehmer herstellt, welcher seine Rufnummer hat abspeichern lassen.

Die mit einer Vermittlungsvorrichtung 4 gekoppelte Sprachverarbeitungsvorrichtung dient zur Spracherkennung von Sprachansagen eines Teilnehmers über ein Endgerät 6 und zur Umsetzung von Nachrichten der Steuervorrichtung 1 in eine Sprachansage, die über die Vermittlungsvorrichtung 4 und gegebenenfalls weiteren Vermittlungsvorrichtungen dem Endgerät 6 zugeführt wird.

Die Dienstentwicklungsvorrichtung 2 dient zur Entwicklung, zum Test und zur Änderung von Diensten. Neue oder geänderte Dienste werden nach der Bearbeitung von der Dienstentwicklungsvorrichtung 2 zur Datenbank 3 gegeben, die den neuen oder geänderten Dienst als Dienstlogikprogramm abspeichert.

Mit dem Kommunikationssystem nach der Fig. 1 kann außerdem ein Dienst abonniert, Dienstparameter geändert und ein Dienst gekündigt werden. Jede dieser weiteren Dienste werden durch Dienstlogikprogramme ausgeführt, die im folgenden näher erläutert werden.

Das folgende Dienstlogikprogramm gibt die Abonnierung oder Bereitstellung eines Dienstes für einen Teilnehmer an:

Sind die Dienstzugangs-Rufnummer '01599' und die Registrierungsnummer 'XXXXXX' gewählt worden?
- J:: Ausgabe: "Bitte Identifikationsnummer eingeben.";
Ist Identifikationsnummer korrekt eingegeben worden?
N: Ausgabe: "Eingabe war inkorrekt.";
- J:: Ausgabe: "Möchten Sie am PN-Dienst teilnehmen? Geben Sie die Ziffer '1' für Ja und die Ziffer '2' für Nein ein.";
Ist die Ziffer '1' eingegeben worden?
N: Die Dienstabonnierung wird abgebrochen;
J: Für den Teilnehmer mit der Registrierungsnummer 'XXXXXX' wird der PN-Dienst eingerichtet;
War die Einrichtung erfolgreich?
N: Ausgabe: "Am PN-Dienst kann nicht teilgenommen werden."
J: Ausgabe: "Sie sind Teilnehmer des PN-Dienstes. Die Dienst-Rufnummer lautet: '01500 YYYYYY', die Dienständerungs-Rufnummer lautet: '01509 YYYYYY' und die Dienstlöschungs-Rufnummer lautet: '01598 YYYYYY'.";

Für dieses und die folgenden Dienstlogikprogramme wird als Beispiel der Persönliche-Rufnummern-Dienst verwendet, der die Verbindung zu einem Teilnehmer (Abonnenten) herstellt, der seine Rufnummer als Zielnummer in der Datenbank 3 abgelegt hat. Die Steuervorrichtung 1 überprüft zuerst welche Parameter (Rufnummer) empfangen worden sind. Von der Vermittlungsstelle 4 wird der Steuervorrichtung 1 diese Rufnummer mitgeteilt. Wenn die Dienstzugangs-Rufnummer '01599' und die Registrierungsnummer ('XXXXXX') gewählt worden ist, wird von der Steuervorrichtung 1 an eine der Vermittlungsanordnung 4 zugeordnete Sprachverarbeitungsvorrichtung 5 ein Steuerbefehl gesandt, daß die Sprachansage ausgegeben werden soll: "Bitte Identifikationsnummer eingeben". Die Registrierungsnummer wird vor Benutzung eines Dienstes dem jeweiligen Teilnehmer z.B. über ein Schreiben mitgeteilt und erlaubt dem Teilnehmer den Zugang zu bestimmten oder allen Diensten eines Dienstanbieters. Die Identifikationsnummer ist eine einzige dem Teilnehmer zugeordnete Nummer und wird als Berechtigung zur Benutzung von Diensten angesehen.

Wenn die Identifikationsnummer nicht korrekt eingegeben worden ist, wird ein Steuerbefehl von der Steuervorrichtung 1 an die Sprachverarbeitungsvorrichtung 5 gesandt, mit der Nachricht, daß die Eingabe nicht korrekt war. Im anderen Fall sendet die Steuerungsvorrichtung 1 an die Sprachverarbeitungsvorrichtung die Nachricht: Möchten Sie am PN-Dienst teilnehmen? Geben Sie die Ziffer '1' für Ja und '2' für Nein ein. Wenn nicht die Ziffer '1' eingegeben worden ist, wird die Dienstabonnierung abgebrochen. Im anderen Fall wird der PN-Dienst für den Teilnehmer eingerichtet. Danach überprüft die Steuervorrichtung, ob die Einrichtung erfolgreich war. Beispielsweise könnte aus organisatorischen Gründen oder, weil der PN-Dienst für den Teilnehmer schon vorhanden ist, eine Einrichtung des Dienstes nicht möglich sein. Ist dies der Fall, wird mit Hilfe der Sprachverarbeitungsvorrichtung 5 die Meldung ausgegeben, daß am PN-Dienst nicht teilgenommen werden kann. Sonst wird dem Teilnehmer seine Dienstnummer, seine Dienständerungsnummer und seine Dienstkündigungsnummer übermittelt.

Im folgenden wird das Dienstlogikprogramm bei der Nutzung eines abonnierten Dienstes (hier am Beispiel des PN-Dienstes) aufgeführt und anschließend erläutert:
Ist die Dienst-Rufnummer '01500 YYYYYY' gewählt worden?
   - J:: Ist Teilnehmernummer 'YYYYYY' vorhanden?
   N: Ausgabe: "Diese Nummer existiert nicht.";
   J: Verbinde mit der Zielnummer;

Die Steuervorrichtung 1 stellt fest, daß die Dienst-Rufnummer ('01500 YYYYYY') zu dem entsprechenden Dienst (PN-Dienst) gewählt worden ist. Anschließend wird überprüft, ob eine solche Teilnehmernummer vorhanden ist. Wenn das nicht der Fall ist, wird über die Sprachvorrichtung 5 ausgegeben, daß diese Nummer nicht existiert. Im anderen Fall wird der Dienst aufgerufen und mit der Zielnummer verbunden, die in der Datenbank 3 gespeichert ist. Bei dem ersten Aufruf des Dienstes wird als Standardwert die Nummer des Abonnenten eingegeben.

Die Änderung von Dienstparametern kann mit dem folgenden Dienstlogikprogramm durchgeführt werden:
Ist die Dienständerungs-Rufnummer '01509 YYYYYY' gewählt worden?
   - J:: Ausgabe: "Bitte Identifikationsnummer (PIN) eingeben.";
   Ist Identifikationsnummer korrekt eingegeben worden?
   N: Ausgabe: "Eingabe war inkorrekt.";
   J: Ausgabe: "Bitte geben Sie eine neue Zielnummer ein.";
   Ausgabe nach Eingabe der neuen Zielnummer: "Sie haben die folgende Zielnummer eingegeben: 'ZZZ';
   wenn Eingabe korrekt ist, gebe die Ziffer '1' ein sonst die Ziffer '2'.";
   Ist die Ziffer '1' eingegeben worden?
   N: Ausgabe: "Die Zielnummer ist nicht verändert worden."
   J: Speicherung der neuen Zielnummer;
   Ausgabe: "Die Zielnummer ist verändert worden."

Das oben aufgeführte Dienstlogikprogramm ermöglicht die Änderung einer Zielnummer, unter der ein Abonnent zu erreichen ist. Wenn die Dienständerungs-Rufnummer ('01509 YYYYYY') gewählt worden ist, wird anschließend von der Sprachverarbeitungsvorrichtung 5 aufgrund eines Steuerbefehls von der Steuervorrichtung 1 ausgegeben, daß die Identifikationsnummer eingegeben werden soll. Wenn die Identifikationsnummer nicht korrekt eingegeben worden ist, wird von der Sprachverarbeitungsvorrichtung 5 mitgeteilt, daß die Eingabe nicht korrekt war, und dann besteht die Möglichkeit einer wiederholten Eingabe der Identifikationsnummer oder des Abbruchs des Dienständerungsvorganges. Wenn die Identifikationsnummer korrekt eingegeben worden ist, wird auf Grund eines Steuerbefehls von der Steuervorrichtung 1 von der Sprachverarbeitungsvorrichtung 5 ausgegeben, daß die neue Zielnummer eingegeben werden soll. Nach Eingabe der neuen Zielnummer, wird die eingegebene Zielnummer durch eine Sprachansage dem Abonnenten mitgeteilt. Anschließend erfolgt die Frage, ob die Eingabe korrekt war. Wenn die Zielnummer nicht korrekt eingegeben worden ist, wird von der Sprachverarbeitungsvorrichtung 5 die Sprachansage ausgegeben, daß die Zielnummer nicht verändert worden ist. Im anderen Fall wird die Zielnummer in der Datenbank 3 gespeichert und von der Sprachverarbeitungsvorrichtung 5 die Sprachansage ausgegeben, daß die Zielnummer verändert worden ist.

Die Löschung der Berechtigung einer Teilnahme an einen Dienst oder die Kündigung eines Dienstes wird mit Hilfe des folgenden Dienstlogikprogrammes durchgeführt:
Ist die Dienstlöschungs-Rufnummer '01598 YYYYYY' gewählt worden?
   - J:: Ausgabe: "Bitte Identifikationsnummer (PIN) eingeben.";
Ist Identifikationsnummer korrekt eingegeben worden?
   - N:: Ausgabe: "Eingabe war inkorrekt.";
   - J:: Ausgabe: "Möchten Sie den PN-Dienst kündigen? Geben Sie die Ziffer '1' für Ja und die Ziffer '2' für Nein ein.";
   Ist die Ziffer '1' eingegeben worden?
   N: Ausgabe: "Der Dienstkündigungsvorgang wird abgebrochen."
   J: Ausgabe: "Bitte bestätigen Sie, daß der PN-Dienst mit der Abonnentennummer 'YYYYYY' gekündigt worden ist."
   Bestätigung des Teilnehmers?
   N: Ausgabe: "Die Kündigung des PN-Dienstes ist nicht erfolgt."
   J: Ausgabe: "Die Kündigung des PN-Dienstes ist erfolgt. Die Zielnummer ist gelöscht worden."

Wenn die Dienstlöschungs-Rufnummer gewählt worden ist wird als nächstes von der Sprachverarbeitungsvorrichtung 5 die Aufforderung ausgegeben, daß die Identifikationsnummer eingegeben werden soll. Wenn die Identifikationsnummer nicht korrekt eingegeben worden ist, wird dies von der Steuervorrichtung 1 mitgeteilt. Im anderen Fall wird gefragt, ob der Dienst gekündigt werden soll. Falls der Dienst gekündigt werden soll, soll die Ziffer '1' und im anderen Fall eine Ziffer '2' eingegeben werden. Wenn nicht die Ziffer '1' eingegeben worden ist, wird der Dienstkündigungsvorgang abgebrochen. In anderen Fall wird eine Sprachansage von der Sprachverarbeitungsvorrichtung 5 ausgegeben, daß der Abonnent die Kündigung bestätigen soll. Wenn der Teilnehmer die Kündigung bestätigt hat, wird ihm eine entsprechende Mitteilung über eine Sprachansage zugeführt. Im anderen Fall erfolgt keine Kündigung.

In der Fig. 2 ist ein weiteres Kommunikationssystem dargestellt, das ein Nachrichtennetz 7, mehrere Endgeräte 8 und eine Dienstvorrichtung 9 enthält. In der Fig. 2 ist exemplarisch eine Vermittlungsvorrichtung 10 des Nachrichtennetzes 7 gezeigt, mit der die Dienstvorrichtung 9 gekoppelt ist. Der Rest des als Block dargestellten Nachrichtennetzes 7 ist mit dem Bezugszeichen 11 versehen.

Die Dienstvorrichtung 9 enthält eine Vermittlungsvorrichtung 12, eine Steuervorrichtung 13, eine Datenbank 14, eine Dienstentwicklungsvorrichtung 15 und eine Sprachverarbeitungsvorrichtung 16. Die Vermittlungsvorrichtung 12 der Dienstvorrichtung 9 ist mit der Vermittlungsvorrichtung 10 des Nachrichtennetzes 7 gekoppelt. Die Vermittlungsvorrichtung 12 ist weiterhin mit der Sprachverarbeitungsvorrichtung 16 und der Steuervorrichtung 13 verbunden. Es besteht auch eine Verbindung zwischen der Steuervorrichtung 13 und der Sprachverarbeitungsvorrichtung 16. An die Steuervorrichtung 13 ist noch die Datenbank 14 angeschlossen, in der die Dienstlogikprogramme abgelegt sind.

Soll eine Verbindung von einem Endgerät 8 mit der Dienstvorrichtung 9 aufgebaut werden, so muß von dem Endgerät 9 aus, die Dienstvorrichtung 9 zuvor angewählt werden. Beispielsweise wird eine Verbindung zur Vermittlungsstelle 10 durch Eingeben der Vorwahlziffern (z.B. '0123') in das Endgerät 8 und die Verbindung zur Dienstvorrichtung 9 durch Eingeben weiterer Wählziffern (z.B. '67') durchgeschaltet. Damit der Benutzer einen Dienst in der Dienstvorrichtung 9 aufrufen kann, müssen weitere Wählziffern (z.B. '999') in das Endgerät 8 eingegeben werden. Die Vermittlungsvorrichtung 12 leitet die empfangenen Zeichen an die Steuervorrichtung 13 weiter, die das mit den Zeichen adressierte Dienstlogikprogramm aus der Datenbank 14 entnimmt. Weitere von der Vermittlungsvorrichtung 12 empfangene Zeichen werden ebenfalls an die Steuervorrichtung 13 weitergegeben. Diese weiteren Zeichen werden als Eingabe für das Dienstlogikprogramm interpretiert. Die Steuervorrichtung 13 gibt dann in Abhängigkeit vom in dem Dienstlogikprogramm verarbeiteten Eingaben einen Steuerbefehl an die Vermittlungsvorrichtung 12 und/oder an die Sprachverarbeitungsvorrichtung 16. Beispielsweise soll die Vermittlungsvorrichtung 12 nach Empfang des Steuerbefehls eine Verbindung zu einem anderen Endgerät 8 herstellen. Die Sprachverarbeitungsvorrichtung 16 kann beispielsweise nach Empfang des Steuerbefehls eine Sprachansage erzeugen, die über die Vermittlungsvorrichtung 12 an den den Dienst aufrufenden Teilnehmer weitergeleitet wird, oder Sprachansagen, die von dem aufrufenden Teilnehmer erwartet werden, erkennen und an die Steuervorrichtung 13 übergeben.

Mit der Datenbank 14 ist noch die Dienstentwicklungsvorrichtung 15 verbunden, mit der ein Dienst entwickelt, getestet und geändert werden kann. Neue oder geänderte Dienste werden nach der Bearbeitung von der Dienstentwicklungsvorrichtung 15 zur Datenbank 14 gegeben, die den neuen oder geänderten Dienst abspeichert.

## Patentansprüche

1. Kommunikationssystem mit einer zur Ausführung von Diensten vorgesehenen Steuervorrichtung (1, 13), die
- nach Empfang von von einem Endgerät (6, 8) gesendeten, aus mehreren Ziffern bestehenden Parametern zur Entnahme eines Dienstlogikprogramms aus einer Datenbank (3, 15) und
- in Abhängigkeit von einem Dienstlogikprogramm und zweiten, aus mehreren Ziffern bestehenden Parametern zur Aktivierung eines Dienstes und
- in Abhängigkeit von einem Dienstlogikprogramm und dritten , aus mehreren Ziffern bestehenden Parametern zur Änderung von Dienstparametern
- in Abhängigkeit von einem Dienstlogikprogramm und ersten, aus mehreren Ziffern bestehenden Parametern zur Bereitstellung eines Dienstes für einen Teilnehmer und zur Übermittlung wenigstens eines Dienstparameters an das Endgerät (6, 8) und/ oder in Abhängigkeit von einem Dienstlogikprogramm und vierten, aus mehreren Ziffern bestehenden Parametern zur Löschung der Teilnahmeberechtigung an einem Dienst für einen Teilnehmer vorgesehen ist.

2. Kommunikationssystem nach Anspruch 1,
**dadurch gekennzeichnet,**
**daß** die Steuervorrichtung (1, 13)
- nach Wahl einer Dienständerungs-Rufnummer von einem Endgerät (6, 8) zur Entnahme des dritten Dienstlogikprogramms und zur Aufforderung einer Identifizierung,
- nach einer positiven Überprüfung der Identifizierung zur Aufforderung der Angabe über die vorzunehmende Änderung wenigstens eines Dienstparameters an das Endgerät (6, 8) und
- zur Speicherung der geänderten, empfangenen Dienstparameter vorgesehen ist.

3. Kommunikationssystem nach Anspruch 1 oder 2,
**dadurch gekennzeichnet,**
**daß** die Steuervorrichtung (1, 13)
- nach Wahl einer Dienstzugangs-Rufnummer von einem Endgerät (6, 8) zur Entnahme des ersten Dienstlogikprogramms,
- nach Empfang einer teilnehmerspezifischen Registrierungsnummer zur Aufforderung einer Identifizierung und
- nach einer positiven Überprüfung der Identifizierung zur Ausgabe der Dienst-Rufnummer, der Dienständerungs-Rufnummer und der Dienstlöschungs-Rufnummer an das Endgerät (6, 8) vorgesehen ist.

4. Kommunikationssystem nach einem der Ansprüche 1 bis 3,
**dadurch gekennzeichnet,**
**daß** die Steuervorrichtung (1, 13)
- nach Wahl einer Dienstlöschungs-Rufnummer von einem Endgerät (6, 8) zur Entnahme des vierten Dienstlogikprogramms und zur Aufforderung einer Identifizierung und
- nach einer positiven Überprüfung der Identifizierung zur Löschung der für die Bereitstellung des Dienstes erforderlichen teilnehmerspezifischen Rufnummern und Dienstparameter vorgesehen ist.

5. Kommunikationssystem nach einem der Ansprüche 1 bis 4,
**dadurch gekennzeichnet,**
**daß** die Steuervorrichtung (1, 13) nach Wahl einer Dienst-Rufnummer von einem Endgerät (6, 8) zur Entnahme des zweiten, zur Aktivierung eines Dienstes dienenden Dienstlogikprogramms und zur Ausführung des Dienstes vorgesehen ist.

6. Kommunikationssystem nach einem der Ansprüche 1 bis 5,
**dadurch gekennzeichnet,**
**daß** die Steuervorrichtung (1, 13) mit einer Datenbank (3, 15) und wenigstens einer Vermittlungsvorrichtung (4, 12) gekoppelt ist,
**daß** eine Vermittlungsvorrichtung (4, 12) zur Weiterleitung von empfangenen Rufnummern und/oder Dienstparametern an die Steuervorrichtung (1, 13) und zum Empfang von Steuerbefehlen von der Steuervorrichtung (1, 13) vorgesehen ist.

7. Kommunikationssystem nach Anspruch 6,
**dadurch gekennzeichnet,**
**daß** die Steuervorrichtung (13), die Vermittlungsvorrichtung (12) und die Datenbank (15) Bestandteil einer Dienstvorrichtung (9) sind, die über ein Nachrichtennetz (7) mit wenigstens einem Endgerät (8) gekoppelt ist.

8. Kommunikationssystem nach Anspruch 6 oder 7,
**dadurch gekennzeichnet,**
**daß** mit einer Vermittlungsvorrichtung (4, 12) und einer Steuervorrichtung (1, 13) eine Sprachverarbeitungsvorrichtung (5, 16) gekoppelt ist, die
- zur Spracherkennung einer über eine Vermittlungsvorrichtung (4, 12) zugeführten Nachricht,
- zur Weiterleitung der Nachricht an die Steuervorrichtung (1, 13),
- zur Bildung einer Sprachansage aus einer von der Steuervorrichtung (1, 13) übermittelten Nachricht und
- zur Zuführung der gebildeten Sprachansage an die Vermittlungsvorrichtung (4, 12) vorgesehen ist.

9. Steuervorrichtung (1, 13) zur Ausführung von Diensten, die
- nach Empfang von von einem Endgerät (6, 8) gesendeten, aus mehreren Ziffern bestehenden Parametern zur Entnahme eines Dienstlogikprogramms aus einer Datenbank (3, 15) und
- in Abhängigkeit von einem Dienstlogikprogramm und zweiten, aus mehreren Ziffern bestehenden Parametern zur Aktivierung eines Dienstes und
- in Abhängigkeit von einem Dienstlogikprogramm und dritten, aus mehreren Ziffern bestehenden Parametern zur Änderung von Dienstparametern
- in Abhängigkeit von einem Dienstlogikprogramm und ersten Parametern zur Bereitstellung eines Dienstes für einen Teilnehmer und zur Übermittlung wenigstens eines Dienstparameters an das Endgerät (6, 8) und/ oder in Abhängigkeit von einem Dienstlogikprogramm und vierten, aus mehreren Ziffern bestehenden Parametern zur Löschung der Teilnahmeberechtigung an einem Dienst für einen Teilnehmer vorgesehen ist.

10. Dienstvorrichtung (9) mit einer zur Ausführung von Diensten vorgesehenen Steuervorrichtung (13), die
- nach Empfang von von einem Endgerät (6, 8) gesendeten, aus mehreren Ziffern bestehenden Parametern zur Entnahme eines Dienstlogikprogramms aus einer Datenbank (3, 15) und
- in Abhängigkeit von einem Dienstlogikprogramm und zweiten Parametern zur Aktivierung eines Dienstes und
- in Abhängigkeit von einem Dienstlogikprogramm und dritten Parametern zur Änderung von Dienstparametern
- in Abhängigkeit von einem Dienstlogikprogramm und ersten Parametern zur Bereitstellung eines Dienstes für einen Teilnehmer und zur Übermittlung wenigstens eines Dienstparameters an das Endgerät (6, 8) und/ oder in Abhängigkeit von einem Dienstlogikprogramm und vierten Parametern zur Löschung der Teilnahmeberechtigung an einem Dienst für einen Teilnehmer vorgesehen ist und
mit einer mit der Steuervorrichtung (13) gekoppelten Vermittlungsvorrichtung (12) zur Weiterleitung von empfangenen Rufnummern und/oder Dienstparametern an die Steuervorrichtung (13) und zum Empfang von Steuerbefehlen von der Steuervorrichtung (13).

## Claims

1. A communication system comprising a controller (1, 13) arranged for service implementation, which controller is arranged for
- extracting a service logical program from a database (3, 15) after the controller has received parameters consisting of various digits transmitted by a terminal unit (6, 8), and
- activating a service in response to a service logical program and second parameters and,
- changing service parameters in response to a service logical program and third parameters consisting of various digits,
- providing a service for a subscriber in response to a service logical program and first parameters and for transmitting at least one service parameter to the terminal unit (6, 8) and/or, in response to a service logical program and fourth parameters, for deleting a subscriber's authorization to use a service.

2. A communication system as claimed in Claim 1, **characterized in that** the controller (1, 13) is arranged for
- extracting the third service logical program and for requesting an identification once a service change number has been dialed by a terminal unit (6, 8),
- requesting the prompt about the intended change of at least one service parameter from the terminal unit (6, 8) after a positive result of an identification check, and
- storing the changed, received service parameters.

3. A communication system as claimed in Claim 1 or 2, **characterized in that** the controller (1, 13) is arranged for
- extracting the first service logical program after a service access number has been dialed by a terminal unit (6, 8),
- requesting an identification after a subscriber-specific registration number has been received,
- transmitting the service number, the service change number and the service delete number to the terminal unit (6, 8) after a positive result of the identification check.

4. A communication system as claimed in one of the Claims 1 to 3, **characterized in that** the controller (1, 13) is arranged for
- extracting the fourth service logical program and for requesting an identification after a terminal unit (6, 8) has dialed a service delete number,
- deleting the subscriber-specific telephone numbers and service parameters necessary for rendering the service available after a positive result of the identification check.

5. A communication system as claimed in one of the Claims 1 to 4, **characterized in that** the controller (1, 13) is arranged for extracting the second service logical program used for activating a service used for service implementation after a service number has been dialed by a terminal unit (6, 8).

6. A communication system as claimed in one of the Claims 1 to 5, **characterized in that** the controller (1, 13) is coupled to a database (3, 15) and at least one switch (4, 12), **in that** a switch (4, 12) is arranged for conveying received telephone numbers and/or service parameters to the controller (1, 13) and for receiving control commands from the controller (1, 13).

7. A communication system as claimed in Claim 6, **characterized in that** the controller (13), the switch (12) and the database (15) form part of a service facility (9) which is coupled to at least one terminal unit (8) *via* a communication network (7).

8. A communication system as claimed in Claim 6 or 7, **characterized in that** a speech processor (5, 16) is coupled to a switch (4, 12) and a controller (1, 13), which speech processor is arranged for
- speech recognition of a message received *via* a switch (4, 12),
- conveying the message to the controller (1, 13),
- forming a prompt from a message transmitted by the controller (1, 13), and
- applying the formed prompt to the switch (4, 12).

9. A controller (1, 13) for implementing services which controller is arranged for
- extracting a service logical program from a database (3, 15) after parameters consisting of various digits sent by a terminal unit (6, 8) have been received, and
- activating a service in response to a service logical program and second parameters consisting of various digits, and
- changing service parameters in response to a service logical program and third parameters consisting of various digits,
- providing a service for a subscriber in response to a service logical program and first parameters and for transmitting at least one service parameter to the terminal unit (6, 8) and/or, in response to a service logical program and fourth parameters, for deleting a subscriber's authorization to use a service.

10. A service facility (9) comprising a controller (13) arranged for carrying out services, which controller is arranged for
- extracting a service logical program from a database (3, 15) after parameters consisting of various digits sent by a terminal unit (6, 8) have been received, and
- activating a service in response to a service logical program and second parameters, and
- changing service parameters in response to a service logical program and third parameters, and
- providing a service for a subscriber in response to a service logical program and first parameters and for transmitting at least one service parameter to the terminal unit (6, 8) and/or for deleting a subscriber's authorization to use a service in response to a service logical program and fourth parameters, and comprising a switch (12) for conveying received telephone numbers and/or service parameters to the controller (13) and for receiving control commands from the controller (13) while being coupled thereto.

## Revendications

1. Système de communication avec un dispositif de commande (1, 13) prévu pour l'exécution de services qui est prévu
- après réception de paramètres transmis par un terminal (6,8) et composés de plusieurs chiffres, pour le prélèvement d'un programme logique de service à partir d'une base de données (3,15) et
- en fonction d'un programme logique de service et de deuxièmes paramètres composés de plusieurs chiffres, pour l'activation d'un service et
- en fonction d'un programme logique de service et de troisièmes paramètres composés de plusieurs chiffres, pour la modification des paramètres de service;
- en fonction d'un programme logique de service et de premiers paramètres composés de plusieurs chiffres, pour la fourniture d'un service pour un usager et pour la transmission d'au moins un paramètre de service au terminal (6, 8) et/ou
en fonction d'un programme logique de service et de quatrièmes paramètres composés de plusieurs chiffres, pour l'effacement de l'autorisation de participation à un service pour un usager.

2. Système de communication selon la revendication 1,
**caractérisé en ce**
**que** le dispositif de commande (1, 13) est prévu :
- après sélection d'un numéro d'appel de changement du service par un terminal (6,8), pour le prélèvement du troisième programme logique de service et pour 1a sollicitation d'une identification,
- après un contrôle positif de l'identification, pour la sollicitation de l'indication à propos de la modification à apporter d'au moins un paramètre de service au terminal (6, 8) et
- pour l'enregistrement des paramètres de service modifiés reçus.

3. Système de communication selon la revendication 1 ou 2,
**caractérisé en ce**
**que** le dispositif de commande (1, 13) est prévu :
- après sélection d'un numéro d'appel d'accès au service par un terminal (6,8), pour le prélèvement du premier programme logique de service,
- après réception d'un numéro d'enregistrement spécifique au participant, pour la sollicitation d'une identification et
- après un contrôle positif de l'identification, pour la sortie du numéro d'appel de service, du numéro d'appel de changement de service et du numéro d'appel d'effacement de service au terminal (6, 8).

4. Système de communication selon l'une des revendications 1 à 3,
**caractérisé en ce**
**que** le dispositif de commande (1, 13) est prévu :
- après sélection d'un numéro d'appel d'effacement de service par un terminal (6,8), pour le prélèvement du quatrième programme logique de service et pour la sollicitation d'une identification et
- après un contrôle positif de l'identification, pour l'effacement des numéros d'appel spécifiques à l'usager nécessaires pour la fourniture du service et les paramètres de service.

5. Système de communication selon l'une des revendications 1 à 4,
**caractérisé en ce**
**que** le dispositif de commande (1, 13) est prévu, après sélection d'un numéro d'appel de service par un terminal (6, 8), pour le prélèvement du deuxième programme logique de service servant à l'activation d'un service et pour l'exécution du service.

6. Système de communication selon l'une des revendications 1 à 5,
**caractérisé en ce**
**que** le dispositif de commande (1, 13) est couplé avec une base de données (3, 15) et au moins un dispositif de commutation (4, 12),
**qu'**un dispositif de commutation (4, 12) est prévu pour la transmission de numéros d'appel reçus et/ou de paramètres de service au dispositif de commande (1, 13) et pour la réception d'ordres de commande par le dispositif de commande (1, 13).

7. Système de communication selon la revendication 6,
**caractérisé en ce**
**que** le dispositif de commande (13), le dispositif de commutation (12) et la base de données (15) font partie d'un dispositif de service (9) qui est couplé par l'intermédiaire d'un réseau de communication (7) à au moins un terminal (8).

8. Système de communication selon l'une des revendications 6 ou 7
**caractérisé en ce**
**qu'**un dispositif de commutation (4, 12) et un dispositif de commande (1, 13) sont couplés à un dispositif de traitement de la parole qui est prévu
- pour la reconnaissance de la parole d'une communication amenée par l'intermédiaire d'un dispositif de commutation (4, 12),
- pour la transmission de la communication au dispositif de commande (1, 13),
- pour la formation d'une annonce verbale à partir d'une communication transmise par le dispositif de commande (1, 13) et
- pour amener l'annonce verbale formée au dispositif de commutation (4, 12).

9. Dispositif de commande (1, 13) en vue de l'exécution de services qui est prévu
- après réception de paramètres composés de plusieurs chiffres et transmis par un terminal (6, 8) pour le prélèvement d'un programme logique de service à partir d'une base de données (3, 15) et
- en fonction d'un programme logique de service et de deuxièmes paramètres composés de plusieurs chiffres pour l'activation d'un service et
- en fonction d'un programme logique de service et de troisièmes paramètres composés de plusieurs chiffres pour la modification des paramètres de service
- en fonction d'un programme logique de service et de premiers paramètres composés de plusieurs chiffres, pour la fourniture d'un service pour un usager et pour la transmission d'au moins un paramètre de service au terminal (6, 8) et/ou en fonction d'un programme logique de service et de quatrièmes paramètres composés de plusieurs chiffres pour l'effacement de l'autorisation de participation à un service pour un usager.

10. Dispositif de service (9) avec un dispositif de commande (13) prévu pour l'exécution de services qui est prévu
- après réception de paramètres composés de plusieurs chiffres et transmis par un terminal (6, 8), pour le prélèvement d'un programme logique de service à partir d'une base de données (3, 15) et
- en fonction d'un programme logique de service et de deuxièmes paramètres composés de plusieurs chiffres, pour l'activation d'un service et
- en fonction d'un programme logique de service et de troisièmes paramètres composés de plusieurs chiffres, pour la modification des paramètres de service
- en fonction d'un programme logique de service et de premiers paramètres composés de plusieurs chiffres, pour la fourniture d'un service pour un usager et pour la transmission d'au moins un paramètre de service au terminal (6, 8) et/ou en fonction d'un programme logique de service et de quatrièmes paramètres composés de plusieurs chiffres pour l'effacement de l'autorisation de participation à un service pour un usager,
avec un dispositif de commutation (12) couplé au dispositif de commande (13) pour la transmission de numéros d'appel reçus et/ou de paramètres de service au dispositif de commande (13) et pour la réception d'ordres de commande par le dispositif de commande (13).
